(19) **Europäisches Patentamt**
**European Patent Office**
**Office européen des brevets**

(11) Veröffentlichungsnummer: **0 335 103**
**A1**

(12) # EUROPÄISCHE PATENTANMELDUNG

(21) Anmeldenummer: **89102987.8**

(22) Anmeldetag: **21.02.89**

(51) Int. Cl.⁴: **C04B 7/60 , A62D 3/00**

(30) Priorität: **26.03.88 DE 3810418**

(43) Veröffentlichungstag der Anmeldung:
**04.10.89 Patentblatt 89/40**

(84) Benannte Vertragsstaaten:
**AT BE CH DE ES FR GB GR IT LI LU NL SE**

(71) Anmelder: **Arens, Wolfgang**
**Keplerstrasse 47**
**D-4006 Erkrath(DE)**

(72) Erfinder: **Arens, Wolfgang**
**Keplerstrasse 47**
**D-4006 Erkrath(DE)**

(74) Vertreter: **Türk, Gille, Hrabal**
**Bruckner Strasse 20**
**D-4000 Düsseldorf 13(DE)**

(54) Verfahren zur Herstellung alkaliarmen stückigen Brennguts.

(57) Die Erfindung betrifft ein Verfahren zur Herstellung von alkaliarmen stückigem Brenngut durch Brennen alkalihaltiger Ausgangsmaterialien, wobei als Brennstoffe zur Aufrechterhaltung der für den Brennprozeß notwendigen Temperaturen einblasbare oder pumpbare Brennstoffe in die heißeste Zone des Brennofens eingespritzt oder eingeblasen werden, die einen Gehalt an Halogenkohlenwasserstoff-Industrieabfällen in einer derartigen Menge aufweisen, daß die bei der Verbrennung entstehenden halogenhaltigen Reaktionsprodukte zur Reaktion mit den unerwünschten basischen Anteilen des Brenngutes ausreichen.

EP 0 335 103 A1

## Verfahren zur Herstellung alkaliarmen stückigen Brennguts

Die Erfindung betrifft ein Verfahren zur Herstellung von alkaliarmen Brenngut durch Brennen alkalihaltiger Ausgangsmaterialien unter Verwendung von halogenhaltigen Materialien aus Industrieabfällen.

Im Rahmen des Umweltschutzes kommt der Abfallbeseitigung eine wichtige Rolle zu. Dem hat in der Bundesrepublik das Abfallbeseitigungsgesetz vom 7. Juni 1972 Rechnung getragen, das zum 1. November 1984 eine vierte Novellierung erfahren hat und nun als Gesetz über die Vermeidung und Entsorgung von Abfällen -Abfallgesetz AbfG- zusammen mit dem Bundesemissionsschutzgesetz und den entsprechenden Ländergesetzen und Verordnungen die rechtlichen Grundlagen für Lagerung und/oder Entsorgung von Abfällen schafft.

Nach diesem Abfallgesetz sind an die Entsorgung von Abfällen aus gewerblichen oder sonstigen wirtschaftlichen Unternehmen, die nach Art, Beschaffenheit oder Menge in besonderem Maße Gesundheit-, Luft- oder Wasser gefährden, explosiv oder brennbar sind, oder Erreger übertragbarer Krankheiten enthalten oder hervorbringen können, zusätzliche Anforderungen zu stellen, d.h., sie können in der Regel nicht zusammen mit Hausmüll entsorgt werden. Wegen der besonderen Umweltgefährdung werden diese Abfälle auch als " Sonderabfälle " bezeichnet.

Im weiteren sind die Abfallerzeuger aufgefordert, die anfallenden Abfallmengen zu reduzieren und einer Wiederverwertung zugänglich zu machen und somit in den Wirtschaftskreislauf zurückzuführen. In zweiter Linie regelt das Abfallgesetz die Entsorgung der Abfälle und insbesondere die Entsorgung der Sonderabfälle.

Ein in zunehmendem Maß eingesetztes Verfahren zur Abfallentsorgung ist die Abfallverbrennung in Verbrennungsanlagen bei mindestens 800° Feuerraumtemperatur. Diese Abfallverbrennung ist mit einer Reduzierung des Abfallvolumens und mit zusätzlichem Energiegewinn verbunden. Bei dieser Art der Abfallentsorgung stellen die Sonderabfälle ein Problem dar.

Es sind zahlreiche Sonderabfälle und Rückstände bekannt, deren Energieinhalt zwar eine nutzbringende Verwendung in Industriefeuerung interessant erscheinen läßt, die aber bei der Verbrennung Reaktionsprodukte bilden, die als Emissionen in den Verbrennungsgasen den Bestimmungen des Bundesemissionsschutzgesetzes und der Technischen Anleitung Luft widersprechen. Zu diesen problematischen Sonderabfällen zählen insbesondere die halogenierten Kohlenwasserstoffe. Bei der Verbrennung dieser halogenierten Kohlenwasserstoffe kann es bei zu kurzer Verweilzeit im Brennraum, zu niedriger Verbrennungstemperatur oder zu geringem Sauerstoffüberschuß zur Bildung von Produkten unvollständiger Verbrennung kommen. So kann es insbesondere bei der Verbrennung von polychlorierten Biphenylen zur Bildung von Dioxinen und Dibenzofuranen kommen.

Bei richtigen Verbrennungsbedingungen werden jedoch die stabilen Oxidationsprodukte der Halogene und der eventuell in den halogenierten Kohlenwasserstoffen enthaltenen Schwermetallrückstände gebildet. Zur Verbrennung dieser halogenierten Kohlenwasserstoffe werden spezielle Hochtemperaturverbrennungsanlagen mit anschließender Reinigung des Rauchgases durch Rauchgaswäsche oder ähnliche Verfahren verwandt, um eine einwandfreie Verbrennung einerseits und andererseits die Reinigung der Rauchgase von unerwünschten Inhaltsstoffen zu ermöglichen.

Diese Hochtemperatur-Sonderabfallverbrennungsanlagen dienen jedoch lediglich zur Verbrennung der Sonderabfälle und eine Nutzung der Heizwerte der halogenierten Kohlenwasserstoffe findet nicht oder nur in geringem Maße bei der Verwendung im Verbrennungsprozeß statt.

Ein Verfahren zur Verwertung industrieller Abfälle in Brennprozessen zur Herstellung von Portlandzement, Kalkstein oder Kalkstein-Ton-Gemischen in Drehrohrofensystemen wird in der DE-OS 26 24 971 beschrieben. Dabei werden die Abfälle derartig in das Brenngut eingebunden, daß das Brenngut die bei der Verbrennung oder Zersetzung der Abfälle entstehenden anorganischen Bestandteile der Abfälle aufnimmt. Als Abfälle kommen auch Flüssigkeiten wie Harze und Öle sowie Abfälle aus der Papier-, Leder-, Holz-, Textil-, Gummioder Linoleumindustrie infrage.

Eine Verbesserung der schlechten Handhabbarkeit dieser Materialien in brikettierter oder pelletisierter Form wird in der DE-OS 29 35 103 beschrieben. Hierbei werden flüssige oder zähflüssige Industrieabfälle mit einem feinteiligen festen, absorptionsfähigen organischen Trägerstoff und gegebenenfalls weiteren Zusatzstoffen vermischt und als Zusatzbrennstoff in brikettierter oder pelletisierter Form bei industriellen Brennprozessen eingesetzt, wobei dieser Brennstoff mit dem Ausgangsmaterial des Brennprozeßgemisches Drehrohröfen zur Zement- oder Kalkherstellung oder Hochöfen zugeführt wird. Der Halogengehalt derart verwendeter Brennstoffe mußte dabei unter 2 % gehalten werden.

Die Aufgabe der Erfindung bestand nun darin, die halogenhaltigen Kohlenwasserstoffe aus Industrieabfällen einer Verbrennung zuzuführen und dabei die Heizwerte dieser Abfälle auszunutzen, die Bildung und Emission umweltschädlicher Nebenprodukte zu vermeiden und dabei ein Brenngut mit ausgezeichneten Eigenschaften zu erhalten.

Gegenstand der Erfindung ist daher ein Verfahren zur Herstellung von alkaliarmem stückigen Brenngut durch Brennen alkalihaltiger Ausgangsmaterialien unter Reaktion von im Brenngut vorhandenen basischen Anteilen mit halogenhaltigen Materialien in einem Brennofen, dadurch gekennzeichnet, daß als Brennstoffe zur Aufrechterhaltung der für den Brennprozeß notwendigen Temperaturen einblasbare oder pumpbare Brennstoffe in die heißeste Zone des Brennofens eingespritzt oder eingeblasen werden, die einen Gehalt an Halogenkohlenwasserstoff-Industrieabfällen in einer derartigen Menge aufweisen, daß die bei der Verbrennung entstehenden halogenhaltigen Reaktionsprodukte zur Reaktion mit den unerwünschten basischen Anteilen des Brenngutes ausreichen.

Der Halogenhalt des einblasbaren oder pumpbaren Brennstoffgemisches beträgt dabei bevorzugt 2 - 70 Gew.-% und besonders bevorzugt 3 - 40 Gew.-%. Als Quelle der einblasbaren oder pumpbaren Brennstoffe sind Kohlenwasserstoffe oder Kohlenwasserstoff-Industrieabfälle besonders geeignet.

Unter den Verbrennungsanlagen ist die Verwendung eines Drehrohrofens zur Verbrennung der einblasbaren oder pumpbaren Brennstoffe aufgrund der hohen Temperaturen und des innigen Kontaktes der Rauchgase mit dem darin beförderten Brenngut besonders geeignet.

Eine besonders bevorzugte Verfahrensform des erfindungsgemäßen Verfahrens ist ein Verfahren zur Herstellung alkaliarmen Klinkers in Drehrohrofensystemen unter Reaktion von im Brenngut vorhandenen basischen Anteilen mit halogenhaltigen Materialien, durch Einblasen oder Einpumpen von einblasbaren oder pumpbaren Brennstoffen in das tiefer gelegende Ende des Drehrohrofens durch eine oder mehrere Öffnungen zur Aufrechterhaltung der zum Brennprozeß notwendigen Temperaturen, dadurch gekennzeichnet, daß im Gemisch mit und/oder neben den einblasbaren oder pumpbaren Brennstoffen Halogenkohlenwasserstoff-Industrieabfälle in einer derartigen Menge eingeblasen oder eingepumpt werden, daß die Menge der gebildeten halogenhaltigen Reaktionsprodukte in den Rauchgasen, die im Gegenstromverfahren zum Brenngut vom tiefer gelegenen Ende des Drehrohrofens in Richtung auf die Einspeiseöffnung des Brenngutes geführt werden, ausreicht, um mit den unerwünschten basischen Anteilen des Brenngutes unter Bildung von anorganischen Halogeniden zu reagieren und die bei den im Drehrohrofen zum Brennen benutzten Temperaturen flüchtigen bzw. als Aerosol vorliegenden anorganischen Halogenide abgedampft bzw. abgeführt und aus den Rauchgasen abgetrennt werden.

Die erfindungsgemäß verwendeten halogenhaltigen Kohlenwasserstoffe aus Industrieabfällen können in flüssiger, zähflüssiger oder fester Form ursprünglich vorliegen. Vor der Verwendung im erfindungsgemäßen Verfahren müssen sie gegebenenfalls in eine einblasbare oder pumpbare Form überführt werden. Eine entsprechende Vorbehandlung stellen z.B. das Lösen oder die Zerkleinerung und das anschließende Dispergieren oder Lösen des zerkleinerten Halogenkohlenwasserstoffabfalls in den als Brennstoff beispielsweise verwendeten Kohlenwasserstoffen oder das Zusammenmischen zur gewünschten Konsistenz dar. Eine weitere Vorbehandlung kann die Änderung des Aggregatzustands darstellen. Beispielsweise können feste Rückstände durch Erhitzen geschmolzen und somit in eine pumpbare Form überführt werden. Gegebenenfalls erfolgen weitere auf die Eigenschaften der Abfälle und Rückstände abgestimmte Vorbehandlungen, bei denen beispielsweise die chemischen Eigenschaften durch Einstellung des pH-Wertes, Abtrennen von den Verbrennungsprozeß störenden reaktiven Inhaltsstoffen durch chemische oder physikalische Prozesse, modifiziert werden.

Beispiele für die halogenhaltigen Kohlenwasserstoff-Industrieabfälle sind Rückstände aus der PVC-Herstellung und -Verarbeitung, Trafoöle aus Transformatoren, Umspannwerken, Altöle, Rückstände aus der Petrochemie, Rückstände von Lösungen zur Entfettung von Metalloberflächen, Rückstände aus der Ölraffination, Hydrauliköle, Extenderöle, Rückstände aus der Herstellung von Pharmazeutika, Pestizidrückstände, Rückstände von Lösungsmitteln von chemischen Reinigungen und ähnliche halogenhaltige Kohlenwasserstoffe. Zu den halogenhaltigen Industrieabfällen gehören auch fluorhaltige und chlorhaltige Materialien; auch bromhaltige Materialien können interessant sein. Bromhaltige Materialien sind häufig in feuerlöschenden Materialien enthalten und kommen demnach in Industrieabfällen vor. Fluorhaltige Materialien sind Teflonprodukte und mischhalogenierte bzw. chloriert-fluorierte Produkte, die flüssig oder fest sind. Teflon selbst kann auch verwendet werden. Die im Verfahren der vorliegenden Erfindung eingesetzten halogenhaltigen Kohlenwasserstoffe werden in den Brennraum durch eine oder mehrere Öffnungen allein oder im Gemisch mit und/oder neben anderen einblasbaren oder pumpbaren Brennstoffen in ausreichender Menge zu der Menge an unerwünschten basischen Anteilen in den Brennofen, z.B. in das tiefer gelegene Ende eines Drehrohrofens eingespeist. Hierbei liefern die halogenhaltigen Kohlenwasserstoffe ausschließlich oder anteilig mit den herkömmlichen Brennstoffen die für den Brennprozeß benötigte Energie.

Herkömmliche Brennstoffe sind Gase und Öle oder feste staubförmige Materialien. Als Gase und Öle kommen Kohlenwasserstoffe in Frage, wie Erdölprodukte. Als fester Brennstoff kommt Kohlenstaub aus Steinkohle oder Braunkohle sowie deren Produkte in Frage.

In den Ofen wird immer ausreichend Luft bzw. sauerstoffhaltiges Gas oder Sauerstoff eingeführt, um eine oxidierende Atmosphäre aufrechtzuerhalten. Dies dient dazu, Explosionsrisiken zu vermeiden; außerdem werden toxische Stoffe vermieden, und demzufolge keine Dioxine oder Dibenzofurane gebildet.

Die Reaktionstemperaturen sind übliche Reaktionstemperaturen und hangen von dem zu brennenden Ausgangsprodukt ab. Sie hängen auch vom gewünschten Endprodukt ab.

Bei den Temperaturen, die zur Sinterung des Brenngutes notwendig sind, findet durch das Zusammenwirken der hohen Temperaturen bei Luft-, bzw. Sauerstoffüberschuß bei der langen Verweilzeit eine vollständige Verbrennung der halogenhaltigen Kohlenwasserstoffe zu gasförmigen Verbrennungsprodukten statt. Die bei der Verbrennung gebildeten halogenhaltigen Reaktionsprodukte werden bevorzugt im Gegenstromverfahren zu dem kontinuierlich eingespeisten Brenngut mit dem Rauchgas zu der Einspeisöffnung des Brenngutes geführt und reagieren dabei mit den unerwünschten basischen Anteilen im Brenngut zu anorganischen Halogeniden.

Die Reaktion mit den halogenhaltigen Reaktionsprodukten ist beispielsweise eine Neutralisationsreaktion. Aus den halogenhaltigen Industrieabfällen können Halogenwasserstoffsäuren, freie Halogene und andere reaktive halogenhaltige Verbindungen und Radikale entstehen.

Unerwünschte alkalische Anteile, die aus Brenngut, z.B. Klinker-Ausgangsmaterial entfernt werden sollen, sind beispielsweise Alkalien, die in dem Ausgangsmaterial enthalten sind. Die Menge der mit den Brennstoffen einzuführenden halogenhaltigen Kohlenwasserstoff-Industrieabfälle hängt daher von der Art des Ausgangsmaterials bzw. von dessen Gehalt an unerwünschten alkalischen Bindungen ab.

Die gebildeten anorganischen Halogenide können Alkalihalogenide wie z.B. Natriumchlorid oder Kaliumchlorid sein.

Die gegebenenfalls staubförmig als Aerosol vorliegenden Alkalihalogenide und/oder die bei den im Drehrohrofen zum Brennen benutzten Temperaturen flüchtigen Alkalihalogenide werden mit dem Rauchgas abgeführt und in Filteranlagen abgeschieden. Als Filterverfahren können Rauchgaswäsche und Elektrofiltrationsverfahren benutzt werden. Bevorzugt ist die Elektrofiltration. Durch die Entfernung der staubförmigen und der flüchtigen anorganischen Halogenide, die im wesentlichen aus Alkalihalogeniden bestehen, werden die Eigenschaften des Brenngutes verbessert. Stückiges Brenngut, das hergestellt werden kann, wäre z.B. Klinker ausgehend von den üblichen Ausgangsmaterialien. Derartige Produkte sind Portlandzement (nach Vermahlen des entsprechenden Klinkers), gebrannter Kalk, andere Zementsorten. So führt z.B. eine Verminderung des Alkaligehaltes des Klinkers zur Erhöhung der Kristallisationsfähigkeit und Festigkeit des aus dem Klinker hergestellten abgebundenen Zementes.

## Ansprüche

1. Verfahren zur Herstellung von alkaliarmen stückigem Brenngut durch Brennen alkalihaltiger Ausgangsmaterialien unter Reaktion von im Brenngut vorhandenen basischen Anteilen mit halogenhaltigen Materialien in einem Brennofen, **dadurch gekennzeichnet**, daß als Brennstoffe zur Aufrechterhaltung der für den Brennprozeß notwendigen Temperaturen einblasbare oder pumpbare Brennstoffe in die heißeste Zone des Brennofens eingespritzt oder eingeblasen werden, die einen Gehalt an Halogenkohlenwasserstoff-Industrieabfällen in einer derartigen Menge aufweisen, daß die bei der Verbrennung entstehenden halogenhaltigen Reaktionsprodukte zur Reaktion mit den unerwünschten basischen Anteilen des Brenngutes ausreichen.

2. Verfahren nach Anspruch 1, dadurch gekennzeichnet, daß der Halogenkohlenwasserstoffgehalt so eingestellt wird, daß der Halogengehalt des einblasbaren oder pumpbaren Brennstoffgemisches 2 - 70 Gew.-%, vorzugsweise 3 - 40 Gew.-% beträgt.

3. Verfahren nach Anspruch 1 oder 2, dadurch gekennzeichnet, daß als einblasbare oder pumpbare Brennstoffe Kohlenwasserstoffe oder Kohlenwasserstoff-Industrieabfälle verwendet werden.

4. Verfahren nach einem der Ansprüche 1 bis 3, dadurch gekennzeichnet, daß in einem Drehrohrofen gebrannt wird.

5. Verfahren nach einem der Ansprüche 1 bis 4, dadurch gekennzeichnet, daß die bei der Verbrennung entstehenden halogenhaltigen Reaktionsprodukte enthaltenden Rauchgase über das Brenngut geleitet werden.

6. Verfahren nach Anspruch 4 oder 5, dadurch gekennzeichnet, daß die bei der Verbrennung entstehenden halogenhaltigen Reaktionsprodukte enthaltenden Rauchgase im Gegenstrom zum kontinuierlich eingespeisten Brenngut geführt werden.

7. Verfahren nach einem der Ansprüche 1 bis 6, dadurch gekennzeichnet, daß alkaliarmer Klinker hergestellt wird.

8. Verfahren zur Herstellung alkaliarmen Klinkers in Drehrohrofensystemen unter Reaktion von im Brenngut vorhandenen basischen Anteilen mit halogenhaltigen Materialien, durch Einblasen oder Einpumpen von einblasbaren oder pumpbaren Brennstoffen in das tiefer gelegene Ende des Drehrohrofens durch eine oder mehrere Öffnungen zur Aufrechterhaltung der zum Brennprozeß notwendigen Temperaturen, dadurch gekennzeichnet, daß im Gemisch mit und/oder neben den einblasbaren oder pumpbaren Brennstoffen Halogenkohlenwasserstoff-Industrieabfälle in einer derartigen Menge eingeblasen oder eingepumpt werden, daß die Menge der gebildeten halogenhaltigen Reaktionsprodukte in den Rauchgasen, die im Gegenstromverfahren zum Brenngut vom tiefer gelegenen Ende des Drehrohrofens in Richtung auf die Einspeiseöffnung des Brenngutes geführt werden, ausreicht, um mit den unerwünschten basischen Anteilen des Brenngutes unter Bildung von anorganischen Halogeniden zu reagieren und die bei den im Drehrohrofen zum Brennen benutzten Temperaturen flüchtigen bzw. als Aerosol vorliegenden anorganischen Halogenide abgedampft bzw. abgeführt und aus den Rauchgasen abgetrennt werden.

9. Verwendung von halogenhaltigen Kohlenwasserstoffen aus Industriebfällen in einblasbarer oder pumpbarer Form als Brennstoffe oder Brennstoffzusatz bei der Herstellung von alkaliarmen Brenngut aus alkalihaltigen Ausgangsmaterialien.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 211 415 (CHEM-TROL POLLUTION SERVICES) * Ansprüche 1-10 * | 1-9 | C 04 B 7/60 A 62 D 3/00 |
| A | FR-A-2 312 464 (KLOCKNER-HUMBOLDT-DEUTZ AG) * Ansprüche 1-7 * | 1-9 | |
| A,D | DE-A-2 624 971 (DYCKERHOFF-ZEMENTWERKE) * Ansprüche 1-14 * | 1-9 | |

RECHERCHIERTE SACHGEBIETE (Int. Cl.4)

C 04 B
C 10 L
A 62 D

Der vorliegende Recherchenbericht wurde für alle Patentansprüche erstellt

| Recherchenort | Abschlußdatum der Recherche | Prüfer |
|---|---|---|
| DEN HAAG | 27-06-1989 | MEERTENS J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 & : Mitglied der gleichen Patentfamilie, übereinstimmendes Dokument

EPO FORM 1503 03.82 (P0403)